# EUROPEAN PATENT SPECIFICATION

(11) **EP 3 936 806 B1**
(45) Date of publication and mention of the grant of the patent: **24.04.2024**
(21) Application number: 21184878.3
(22) Date of filing: 09.07.2021
(51) Int. Cl.: F28D 20/00

(54) **DEVICE FOR STORING ELECTRICAL ENERGY, SYSTEM AND METHOD THEREFOR**
VORRICHTUNG ZUR SPEICHERUNG VON ELEKTRISCHER ENERGIE, SYSTEM UND VERFAHREN DAFÜR
DISPOSITIF DE STOCKAGE D'ÉNERGIE ÉLECTRIQUE, SYSTÈME ET PROCÉDÉ ASSOCIÉS

(30) Priority: 10.07.2020 NL 2026046
(43) Date of publication of application: 12.01.2022
(73) Proprietor: Heatwacht Holding B.V., 8042 PS Zwolle (NL)
(72) Inventor: Wolters, Hans, Zwolle (NL)
(74) Representative: Arnold & Siedsma

(56) References cited:
- CN-A- 110 440 467
- CN-U- 201 542 131
- US-A1- 2016 097 603
- US-A1- 2016 320 145
- US-A1- 2020 011 207

## Description

The present invention relates to a device for storing energy. The invention further relates to a system for storing energy and a method for storing energy.

In practice buildings are becoming more and more self-sufficient in terms of energy. In order to achieve this, owners of buildings are increasingly often having solar panel installations installed on or close to their building. The solar panel installation generates current when the sun shines, wherein the generated current can be used in the building or can be fed back to the electricity grid. In practice the production of electricity is usually greater in summer than the energy consumption of the building, while in winter the production of electricity is smaller than the energy consumption of the building. On one hand, this is due to the greater electricity production of the solar panel installation in summer, and on the other hand due to the greater demand for energy in winter, since the building must also be heated in winter.

Batteries are known in practice for storing the overproduction of electricity in summer. The most common batteries are lithium ion batteries or salt batteries. These batteries can be charged in summer, after which they relinquish their electricity in winter, for instance to a heat pump.

US 2016/097603 A discloses a device for storing energy according to the preamble of claim 1 and describes a heat accumulator having a housing to receive a heat storage medium, a heat storage medium received in the housing, and a heat exchanger, wherein the heat accumulator comprises an electrical heating means which is configured to convert electrical energy into heat energy.

CN 201 542 131 U relates to a liquid temperature-controlled electric quilt. In a quilt body, an electric heating wire is provided with a heat-transferring, protective and temperature-controlling device, liquid is filled in a heat transfer tube, and the electric heating wire is in the liquid

CN 110 440 467 A relates to a molten salt storage tank with electric heating, heat exchange and heat storage integrated structure.

US 2020/011207 A1 relates to a power plant for generating electrical energy and a method for operating a power plant.

US 2016/320145 A1 relates to an element for a thermal energy storage.

A drawback of the common batteries is that they are expensive. Because of this, it takes years to recoup the investment of purchasing and installing the batteries. A further drawback is that, when lithium-ion batteries catch fire, they are almost impossible to extinguish. When the battery is placed in or close to a building, this can be very dangerous. The production of such batteries is in some cases also insufficiently sustainable

It is an object of the invention to obviate or at least reduce at least one of the above stated problems. It is a particular object of the invention to provide a device for storing energy in simple and cost-efficient manner.

The object of the invention is achieved with a device for storing energy according to claim 1.

Electrical energy can be converted into thermal energy by the electric heating element of the heat storage element, wherein the heat created by the electric heating element is then relinquish to the energy storage material. A device which can store energy is hereby provided in simple manner. This makes it possible to store an amount of energy which may be superfluous at any point.

The thermal energy stored in the energy storage material can be relinquish to the fluid flowing through the conduit by the heat exchanger of the heat extraction element. In the context of the invention conduit is understood to mean an element with inner space through which a fluid can flow, such as a hose, pipe and the like. The heat extraction element can be arranged both in and outside the tube. An advantage of the use of such a heat extraction element is that the thermal energy stored in the energy storage material can be extracted at any desired moment, and this thermal energy can then be used immediately to heat a building. This makes it possible to use the stored energy if an energy shortage arises at any moment. In practice, this energy shortage will usually arise in colder periods, during which a building must be heated. The extracted heat can then be applied directly or indirectly for heating of the building and/or as hot sanitary water.

Because the heat storage element is arranged removably in the tube, the heat storage element can be removed from the tube. In the context of the invention tube is understood to mean a housing with inner space in the form of a tubular profile. This application of such a tube is advantageous when the electric heating element is for instance malfunctioning or needs to be replaced. The heating element can then be removed from the opening of the tube in simple manner without removal of the energy storage material from the storage space being necessary. The tube remains at its original position in the storage space. The repaired or new electric heating element can hereby then be placed back into the tube, after which the device is once again ready for use.

In a preferred embodiment according to the invention the storage space is provided with a plurality of tubes which are placed at (equal) distances from each other. A kind of grid of tubes is hereby realized in the storage space, with the energy storage material therearound. By placing the tubes at preferably equal distances a more effective and uniform heating of the energy storage material is obtained.

The energy storage material preferably has a high specific heat capacity. A large amount of thermal energy can thus be stored in the device. Examples of energy storage material which can be applied in the present invention are for instance stone material and metals.

According to the invention the at least one heat extraction element is arranged in at least one of the tubes, wherein the at least one heat extraction element is removable from the opening of the at least one tube.

Because the heat extraction element is also removable from the tube, the heat extraction element can also be removed from the device in simple manner through the opening of the tube, for instance when the tube is leaking or needs to be replaced. This facilitates repairs to the device according to the invention.

In an embodiment according to the invention the tubes are filled with a static thermal conductor for conducting the heat of the electric heating elements to the energy storage material.

In the present application static means that the thermal conductor substantially does not move, i.e. that the thermal conductor is not susceptible to flow.

With the thermal conductor, which is positioned between the electric heating element and the tube, the heat of the electric heating element is passed on to the energy storage material in effective manner. An advantage hereof is that the heat is extracted from the electric heating element more quickly, whereby the heating element need withstand less high temperatures. This enhances the lifespan of the device.

In an embodiment according to the invention the static thermal conductor comprises thermal oil.

Experiments have shown that thermal oil is highly suitable for conducting heat. An advantage of thermal oil is that it can be heated to high temperatures without evaporation of the oil taking place. A further advantage of thermal oil is that it is a liquid and therefore easily penetrates into every corner and/or edge of the tube. This improves the relinquishing of heat to the energy storage material. The thermal oil is preferably synthetic thermal oil, since the boiling point thereof is even higher, as high as 400°C. This reduces the chance of evaporation of the oil, and thereby the chance of energy loss, still further.

In an embodiment according to the invention the energy storage material comprises basalt and/or magnetite.

Basalt is a type of stone with a relatively high heat capacity. A large amount of electrical energy can hereby be stored in the form of thermal energy. This enhances the capacity of the device. A further advantage is that basalt is relatively inexpensive, whereby a cost-efficient device for storing energy can be realized.

Magnetite is an iron ore with a very high heat capacity, this increasing the total amount of thermal energy which can be stored in the device according to the invention. Experiments have shown that the storage capacity of magnetite lies up to 70% higher than for instance basalt. Less storage space is hereby needed for the same storage capacity of thermal energy. Magnetite can further be heated to very high temperatures, as high as 1000°C. This has the result that a large amount of thermal energy can be stored in the energy storage material.

In an embodiment according to the invention the energy storage material is further filled up with a thermal conductor, preferably thermal oil.

Filling up the storage space further with a thermal conductor prevents a substantial part of the storage space from being filled with air. The thermal oil here preferably fills up the openings and cavities in the energy storage material, such as basalt and/or magnetite. Because the thermal conductor has a greater specific heat capacity than air, more thermal energy can in this way be stored in the storage space. This increases the capacity of the device according to the invention. It is particularly in the case of thermal oil, which is a liquid, that effective use of the storage space is realized. In a currently preferred embodiment thermal oil is particularly applied in both the storage space and the tube.

In an embodiment according to the invention the tubes comprise a wall, wherein the wall is provided with a partially open structure.

In the present application a partially open structure is understood to mean a structure comprising a plurality of openings. Preferably provided here in the wall of the tube are openings which provide access from the inner space of the tube to the storage space.

The partially open structure of the wall has the effect that the heat is transferred more effectively from the electric heating element, which is situated in the tube, to the energy storage material, which is situated outside the tube. It is particularly in the embodiment in which the tube and the storage space are further filled with a thermal conductor that the partially open structure provides for a more effective heat conduction.

In an embodiment according to the invention the device further comprises a controller for individually controlling the heat storage elements and/or heat extraction elements.

With the controller the heat storage elements and/or heat extraction elements can be controlled such that electrical energy is converted into thermal energy by the heat storage elements and thermal energy is extracted by the heat extraction elements at the same time. An efficient device is hereby obtained, which can for instance in winter add an excess of electricity production by solar panels to the device in the form of thermal energy, while simultaneously heating the building by means of thermal energy stored in the energy storage material. In the case of a plurality of heat storage elements and/or heat extraction elements each individual element is preferably individually controllable by the controller. The individual elements being individually controllable enables the device to be heated in sections, wherein each section comprises one or more tubes. The controller can be a stand-alone controller which controls the storage and extraction, or be a central controller or be integrated in such a central controller. With a central control the energy storage according to the invention can form part of the overall energy management of for instance a building or multiple buildings. The tuning of components thereof, and thereby the overall efficiency, can hereby be further improved.

In an embodiment according to the invention the device further comprises a number of temperature sensors which are arranged in or close to at least a part of the number of tubes for the purpose of measuring the temperature.

With the number of temperature sensors the temperature in or close to at least a part of the number of tubes can be measured. A temperature sensor is preferably arranged in or close to each tube. In the embodiment with the controller the temperature sensors are preferably operatively connected to the controller, so that it can control the heat storage elements and heat extraction elements subject to the temperature in the tubes. Heat can hereby be stored or extracted from the device in effective manner.

In an embodiment according to the invention the storage space is surrounded by a layer of insulating material.

Owing to the insulating material, the energy stored in the energy storage material is relinquished less readily to the surrounding area. The energy hereby remains stored in the energy storage material for longer, which is advantageous for the efficiency of the device. The advantage is that the energy which is stored in summer can actually be used in winter to heat a building.

In an embodiment according to the invention the layer of insulating material comprises foam glass.

The advantage of foam glass is that it has a very high insulating value. A further advantage of foam glass is that it is resistant to liquids, this is in contrast to for instance rock wool. This provides the option of arranging the layer of insulating material both on the outer side and/or the inner side. Foam glass arranged on the outer side of the storage space is resistant to weather conditions, such as for instance rain. Foam glass arranged on the inner side of the storage space is resistant to liquid, such as for instance thermal oil. With foam glass a thermally well-insulated and thereby efficient device for storing energy is realized.

In an embodiment according to the invention the at least one heat extraction element is operatively connected to a buffer vat for relinquishing the extracted heat.

The heat extraction element is preferably operatively connected to the buffer vat with a coupling and/or conduit. The conduit is for instance connected to a heat exchanger arranged in the buffer vat. With the buffer vat the energy extracted from the energy storage material by the heat extraction element can be relinquished in simple manner, after which this same energy can then be used to heat a building. This is for instance possible when the buffer vat is connected to a central heating system or sanitary water boiler.

In an embodiment according to the invention the electric heating element of the at least one heat storage element is operatively connected to a solar panel and/or wind installation, such that the solar panel and/or wind installation provides the electric heating element with electricity.

By being operatively connected to a solar panel and/or wind installation the heat storage elements can be provided with sustainably generated electricity. A self-sufficient energy system for a building is hereby obtained. The operative connection is for instance embodied with a converter configured to transfer the energy of the solar panel and/or wind installation to the heating elements.

The present invention further relates to a system for storing electrical energy, wherein the system comprises:
- a device in an embodiment as described above;
- a buffer vat which is operatively connected to the heat extraction element; and
- a solar panel and/or wind installation which is operatively connected to the heat storage element.

The system relates to the same advantages and effects as described for the device. The system is preferably applied in or for a building, where the energy storage and a solar panel and/or wind installation are also arranged. A further advantage of the system is that, when there is an energy surplus and energy can therefore be acquired cheaply, this energy can be added to the device according to the invention.

The present invention further relates to a method for storing electrical energy, wherein the method comprises of:
- providing a device as described above; and
- heating the energy storage material by means of the at least one energy storage element.

The method relates to the same advantages and effects as described for the device and the system.

In an embodiment according to the invention the method further comprises the step of:
- extracting heat from the energy storage material by means of the at least one heat extraction element.

Further features, advantages and details of the invention are described on the basis of embodiments thereof, wherein reference is made to the accompanying drawings, in which:
- figures 1A-B show schematically a front and side view of an example of a device according to the invention;
- figures 2A-B show embodiments of a tube according to the invention;
- figure 3 shows a top view of a tube according to the invention; and
- figure 4 shows schematically a system according to the invention.

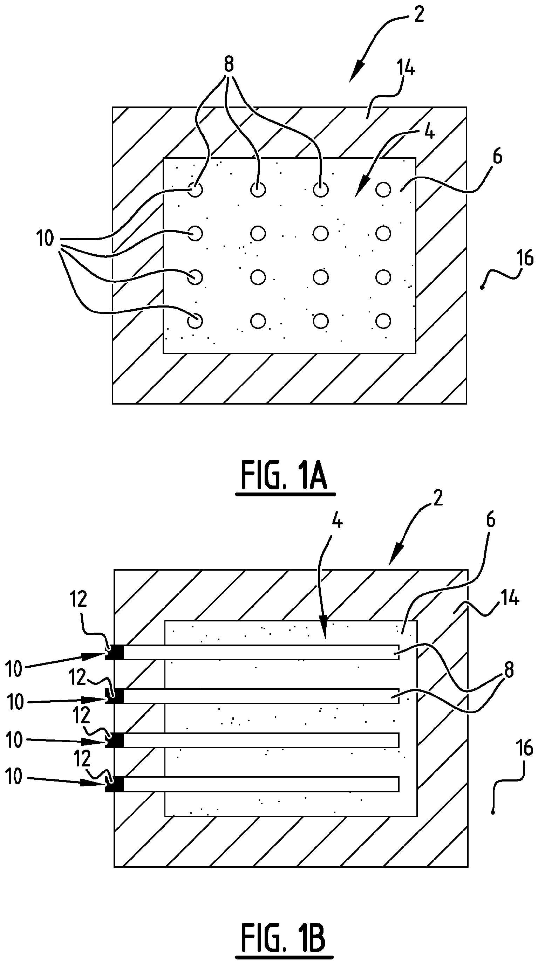

Device 2 (figures 1A-B) comprises a storage space 4 in which energy storage material 6 is provided. In the shown embodiment the energy storage material takes the form of basalt rocks and thermal oil, wherein thermal oil fills the spaces between the basalt rocks. The basalt rocks can vary in size, for instance from 1 mm to 50 centimetres. By filling the space between the basalt rocks with thermal oil the entire volume of storage space 4 is used effectively for the purpose of storing energy. Arranged on the outer side of energy storage space 4 is insulating material 14, taking the form of foam glass in the shown embodiment. Foam glass has the advantage of having a very high insulating value. Insulating material 14 can hereby prevent the heat in energy storage material 6 from disappearing to surrounding area 16. A further advantage of foam glass is that it is resistant to liquid, whereby it will still maintain its insulating function during contact with thermal oil or rain.

Tubes 8 are further arranged in storage space 4. In the shown embodiment sixteen cylindrical tubes 8 are positioned in a grid of 4 by 4, at equal distances from each other. Each of the tubes 8 is provided with a separate opening 10. Openings 10 are closed off from surrounding area 16 by means of flange connection 12. Flange connection 12 is releasable, such that opening 10 provides access to an inner space of tube 8. It will be apparent that it is also possible according to the invention to apply tubes with a different shape and/or a different number of tubes.

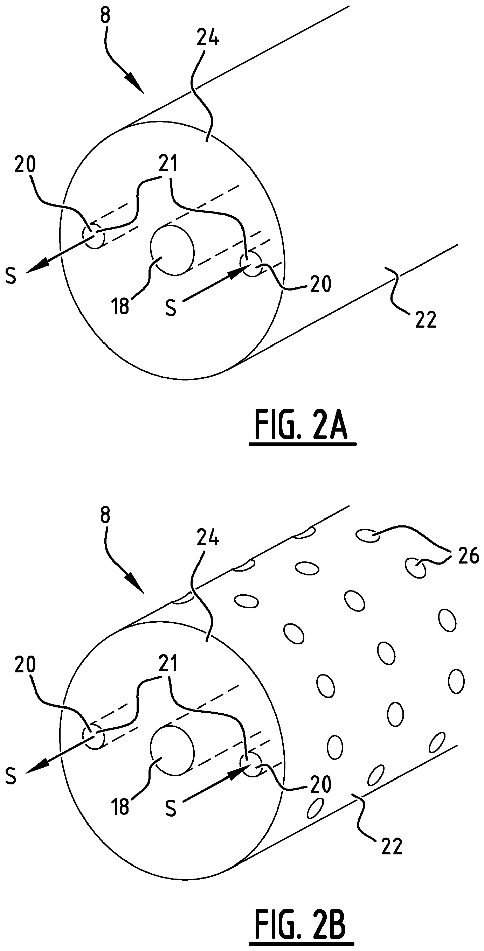

Tube 8 (figures 2A-B) comprises tubular wall 22. Heat storage element 18 and heat extraction element 20 are provided in shown tube 8. Heat storage element 18 comprises an electric heating element 18 and in the shown embodiment is positioned substantially in the centre of tube 8. Arranged in the space between heat storage element 18 and wall 22 is heat extraction element 20, which comprises a conduit which is provided with inner space 21. A fluid, for instance thermal oil or another suitable fluid, can be fed through inner space 21 in flow direction S, such that heat is extracted from energy storage material 6. This flow can for instance be generated with a pump (not shown). In the shown embodiment tube 8 is further filled with static thermal conductor 24, in this embodiment thermal oil. The static conductor increases the efficiency of the relinquishing of heat by heat storage element 18 and the extraction of heat by heat extraction element 20.

In the shown embodiment wall 22 of tube 8 (figure 2B) is provided with openings 26, whereby wall 22 has a partially open structure. Static thermal conductor 24 is hereby in direct contact with the thermal oil in storage space 4, whereby a more effective conduction of the heat is realized.

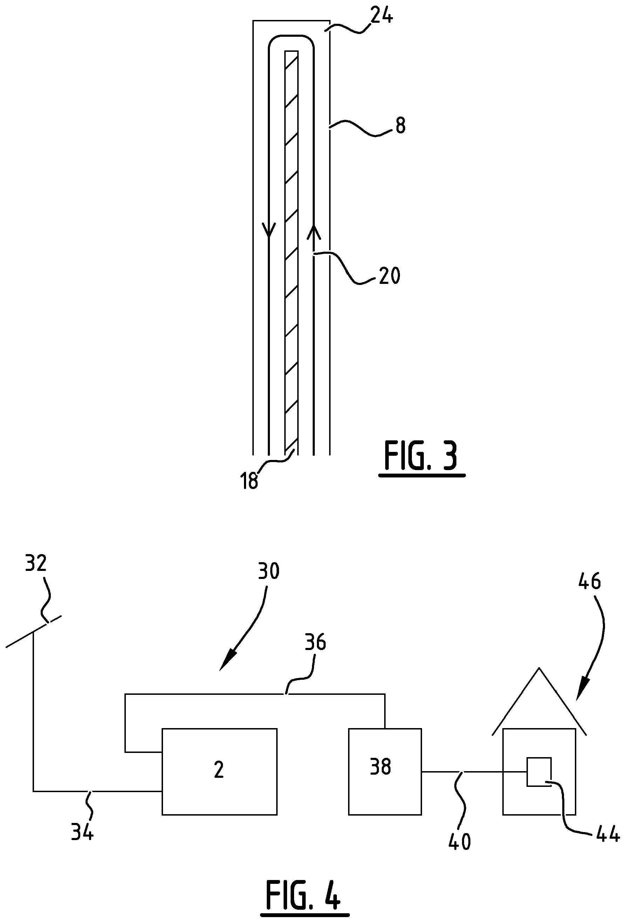

Heat storage element 18 (figure 3) and heat extraction element 20 are arranged in tube 8. In the shown embodiment heat extraction element 20 is positioned round heat storage element 18 in the manner of a loop and extends over substantially the whole length of tube 8. An effective transfer of heat between the static thermal conductor 24 and heat extraction element 20 is hereby realized. Heat storage element 18 and heat extraction element 20 are further arranged removably in tube 8, whereby they can be removed from device 2 in simple manner in the case of malfunction.

System 30 (figure 4) comprises solar panel installation 32 for generating electricity. The electricity is fed via electricity line 34 to device 2, where the electricity is converted into thermal energy by means of heat storage elements 18. The thermal energy is relinquished by heat storage elements to static thermal conductor 24, which then relinquishes the thermal energy to energy storage material 6. When building 46 must be heated, thermal energy can be extracted from energy storage material 6 by means of heat extraction elements 20. The control of heat storage elements 18 and heat extraction elements 20 is controlled by a controller (not shown here). The fluid which is fed through inner space 21 of the tube and absorbs the thermal energy can then be fed through conduit 36 to buffer vat 38 which comprises for instance water. The thermal energy in the fluid can here be relinquished to the water in the buffer vat, for instance by a heat exchanger. A second heat exchanger in buffer vat 38 can then absorb the thermal energy and feed it by means of conduit 40 to central heating installation 44 in building 46. After this, central heating installation 44 can heat building 46 with the thermal energy which was still stored efficiently in device 2 up to that point. It will be apparent that a different type of configuration of system 30 according to the invention is possible. It is thus also possible to connect solar panel installation 32 directly to building 46 and to feed excess energy via conduit 34 to device 2. Alternatively or additionally, it is also possible to provide a coupling to the general electricity grid.

The present invention is by no means limited to the above described embodiments thereof. The rights sought are defined by the following claims, wherein in the scope of the following claims many modifications can be envisaged.

## Claims

1. Device (2) for storing energy, comprising
- a storage space (4) comprising an energy storage material (6);
- a number of individual tubes (8) arranged in the energy storage material (6), wherein the number of tubes (8) is provided with a separate opening (10);
- at least one heat storage element (18) comprising an electric heating element which is arranged in at least one of the tubes (8) for the purpose of heating the energy storage material (6); and
- at least one heat extraction element (20) comprising a heat exchanger which comprises a conduit provided with an inner space (21), wherein the inner space (21) is configured for throughfeed of a fluid for the purpose of extracting heat from the energy storage material (6),
wherein the at least one heat storage element (18) is removable from the opening (10) of the number of tubes (8), **characterised in that**
the at least one heat extraction element (20) is arranged in at least one of the tubes (8), and wherein the at least one heat extraction element (20) is removable from the opening (10) of the at least one tube (8).

2. Device (2) according to any one of the claims 1, wherein the tubes (8) are filled with a static thermal conductor for conducting the heat of the electric heating elements to the energy storage material (6).

3. Device (2) according to claim 2, wherein the static thermal conductor comprises synthetic oil.

4. Device (2) according to any one of the foregoing claims, wherein the energy storage material (6) comprises basalt and/or magnetite.

5. Device (2) according to any one of the foregoing claims, wherein the storage space (4) is further filled up with a thermal conductor, preferably thermal oil.

6. Device (2) according to any one of the foregoing claims, wherein the tubes (8) comprise a wall, wherein the wall is provided with a partially open structure.

7. Device (2) according to any one of the foregoing claims, further comprising a controller for individually controlling the heat storage elements (18) and/or heat extraction elements (20).

8. Device (2) according to any one of the foregoing claims, further comprising a number of temperature sensors which are arranged in or close to at least a part of the number of tubes (8) for the purpose of measuring the temperature.

9. Device (2) according to any one of the foregoing claims, wherein the storage space (4) is surrounded by a layer of insulating material (14).

10. Device (2) according to claim 9, wherein the layer of insulating material (14) comprises foam glass.

11. Device (2) according to any one of the foregoing claims, wherein the at least one heat extraction element (20) is operatively connected to a buffer vat for relinquishing the extracted heat.

12. Device (2) according to any one of the foregoing claims, wherein the electric heating element of the at least one heat storage element (18) is operatively connected to a solar panel (32) and/or wind installation, such that the solar panel (32) and/or wind installation provides the electric heating element with electricity.

13. System for storing electrical energy, comprising:
- a device (2) according to any one of the foregoing claims;
- a buffer vat which is operatively connected to the heat extraction element (20); and
- a solar panel (32) and/or wind installation which is operatively connected to the heat storage element (18).

14. Method for storing electrical energy, comprising of:
- providing a device (2) according to any one of the foregoing claims;
- heating the energy storage material (6) by means of the at least one energy storage element (18), and further preferably comprising of:
- extracting heat from the energy storage material (6) by means of the at least one heat extraction element (20).

## Patentansprüche

1. Vorrichtung (2) zum Speichern von Energie, umfassend
- einen Speicherraum (4), umfassend ein Energiespeichermaterial (6);
- eine Anzahl von individuellen Rohren (8), die in dem Energiespeichermaterial (6) angeordnet sind, wobei die Anzahl von Rohren (8) mit einer separaten Öffnung (10) versehen ist;
- mindestens ein Wärmespeicherelement (18), umfassend ein elektrisches Wärmeelement, das in mindestens einem der Rohre (8) zwecks eines Erwärmens des Energiespeichermaterials (6) angeordnet ist; und
- mindestens ein Wärmeextraktionselement (20), umfassend einen Wärmetauscher, der eine Leitung umfasst, die mit einem Innenraum (21) versehen ist, wobei der Innenraum (21) für eine Durchströmung eines Fluids zwecks eines Extrahierens von Wärme aus dem Energiespeichermaterial (6) konfiguriert ist,
wobei das mindestens eine Wärmespeicherelement (18) von der Öffnung (10) der Anzahl von Rohren (8) entfernbar ist, **dadurch gekennzeichnet, dass** das mindestens eine Wärmeextraktionselement (20) in mindestens einem der Rohre (8) angeordnet ist, und wobei das mindestens eine Wärmeextraktionselement (20) von der Öffnung (10) des mindestens einen Rohrs (8) entfernbar ist.

2. Vorrichtung (2) nach einem der Ansprüche 1, wobei die Rohre (8) mit einem statischen thermischen Leiter zum Leiten der Wärme der elektrischen Wärmeelemente auf das Energiespeichermaterial (6) gefüllt sind.

3. Vorrichtung (2) nach Anspruch 2, wobei der statische thermische Leiter ein synthetisches Öl umfasst.

4. Vorrichtung (2) nach einem der vorstehenden Ansprüche, wobei das Energiespeichermaterial (6) Basalt und/oder Magnetit umfasst.

5. Vorrichtung (2) nach einem der vorstehenden Ansprüche, wobei der Speicherraum (4) ferner mit einem thermischen Leiter, vorzugsweise einem Thermalöl, gefüllt ist.

6. Vorrichtung (2) nach einem der vorstehenden Ansprüche, wobei die Rohre (8) eine Wand umfassen, wobei die Wand mit einer teilweise offenen Struktur versehen ist.

7. Vorrichtung (2) nach einem der vorstehenden Ansprüche, ferner umfassend eine Steuerung zum individuellen Steuern der Wärmespeicherelemente (18) und/oder Wärmeextraktionselemente (20).

8. Vorrichtung (2) nach einem der vorstehenden Ansprüche, ferner umfassend eine Anzahl von Temperatursensoren, die in oder nahe mindestens einem Teil der Anzahl von Rohren (8) zwecks der Messung der Temperatur angeordnet sind.

9. Vorrichtung (2) nach einem der vorstehenden Ansprüche, wobei der Speicherraum (4) von einer Schicht aus Isoliermaterial (14) umgeben ist.

10. Vorrichtung (2) nach Anspruch 9, wobei die Schicht aus Isoliermaterial (14) Schaumglas umfasst.

11. Vorrichtung (2) nach einem der vorstehenden Ansprüche, wobei das mindestens eine Wärmeextraktionselement (20) mit einer Pufferwanne zum Abgeben der extrahierten Wärme wirkverbunden ist.

12. Vorrichtung (2) nach einem der vorstehenden Ansprüche, wobei das elektrische Wärmeelement des mindestens einen Wärmespeicherelements (18) mit einem Solarpanel (32) und/oder einer Windanlage wirkverbunden ist, derart, dass das Solarpanel (32) und/oder die Windanlage das elektrische Wärmeelement mit Elektrizität versorgt.

13. System zum Speichern von elektrischer Energie, umfassend:
- eine Vorrichtung (2) nach einem der vorstehenden Ansprüche;
- eine Pufferwanne, die mit dem Wärmeextraktionselement (20) wirkverbunden ist; und
- ein Solarpanel (32) und/oder eine Windanlage, die mit dem Wärmespeicherelement (18) wirkverbunden ist.

14. Verfahren zum Speichern von elektrischer Energie, umfassend:
- Bereitstellen einer Vorrichtung (2) nach einem der vorstehenden Ansprüche;
- Erwärmen des Energiespeichermaterials (6) mittels des mindestens einen Energiespeicherelements (18), und ferner vorzugsweise umfassend:
- Extrahieren von Wärme aus dem Energiespeichermaterial (6) mittels des mindestens einen Wärmeextraktionselements (20).

## Revendications

1. Dispositif (2) permettant le stockage d'énergie, comprenant
- un espace de stockage (4) comprenant un matériau de stockage d'énergie (6) ;
- un nombre de tubes individuels (8) agencés dans le matériau de stockage d'énergie (6), dans lequel le nombre de tubes (8) est doté d'une ouverture séparée (10) ;
- au moins un élément de stockage de chaleur (18) comprenant un élément chauffant électrique qui est agencé dans au moins l'un parmi les tubes (8) en vue de chauffer le matériau de stockage d'énergie (6) ; et
- au moins un élément d'extraction de chaleur (20) comprenant un échangeur de chaleur qui comprend un conduit doté d'un espace intérieur (21), dans lequel l'espace intérieur (21) est conçu pour le passage d'un fluide en vue d'extraire de la chaleur du matériau de stockage d'énergie (6),
dans lequel l'au moins un élément de stockage de chaleur (18) peut être retiré de l'ouverture (10) du nombre de tubes (8), **caractérisé en ce que** l'au moins un élément d'extraction de chaleur (20) est agencé dans au moins l'un parmi les tubes (8), et dans lequel l'au moins un élément d'extraction de chaleur (20) peut être retiré de l'ouverture (10) de l'au moins un tube (8).

2. Dispositif (2) selon l'une quelconque des revendications 1, dans lequel les tubes (8) sont remplis d'un conducteur thermique statique permettant de conduire la chaleur des éléments chauffants électriques vers le matériau de stockage d'énergie (6).

3. Dispositif (2) selon la revendication 2, dans lequel le conducteur thermique statique comprend de l'huile synthétique.

4. Dispositif (2) selon l'une quelconque des revendications précédentes, dans lequel le matériau de stockage d'énergie (6) comprend du basalte et/ou de la magnétite.

5. Dispositif (2) selon l'une quelconque des revendications précédentes, dans lequel l'espace de stockage (4) est en outre rempli d'un conducteur thermique, de préférence de l'huile thermique.

6. Dispositif (2) selon l'une quelconque des revendications précédentes, dans lequel les tubes (8) comprennent une paroi, dans lequel la paroi est dotée d'une structure partiellement ouverte.

7. Dispositif (2) selon l'une quelconque des revendications précédentes, comprenant en outre un dispositif de commande destiné à commander individuellement les éléments de stockage de chaleur (18) et/ou les éléments d'extraction de chaleur (20).

8. Dispositif (2) selon l'une quelconque des revendications précédentes, comprenant en outre un nombre de capteurs de température qui sont agencés dans ou à proximité d'au moins une partie du nombre de tubes (8) en vue de mesurer la température.

9. Dispositif (2) selon l'une quelconque des revendications précédentes, dans lequel l'espace de stockage (4) est entouré d'une couche de matériau isolant (14).

10. Dispositif (2) selon la revendication 9, dans lequel la couche de matériau isolant (14) comprend du verre mousse.

11. Dispositif (2) selon l'une quelconque des revendications précédentes, dans lequel l'au moins un élément d'extraction de chaleur (20) est relié de manière fonctionnelle à un ballon tampon permettant de céder la chaleur extraite.

12. Dispositif (2) selon l'une quelconque des revendications précédentes, dans lequel l'élément chauffant électrique de l'au moins un élément de stockage de chaleur (18) est relié de manière fonctionnelle à un panneau solaire (32) et/ou une installation éolienne, de telle sorte que le panneau solaire (32) et/ou l'installation éolienne fournit l'élément chauffant électrique en électricité.

13. Système permettant le stockage d'énergie électrique, comprenant :
- un dispositif (2) selon l'une quelconque des revendications précédentes ;
- un ballon tampon qui est relié de manière fonctionnelle à l'élément d'extraction de chaleur (20) ; et
- un panneau solaire (32) et/ou une installation éolienne qui est relié(e) de manière fonctionnelle à l'élément de stockage de chaleur (18).

14. Procédé de stockage d'énergie électrique, comprenant les étapes consistant à :
- fournir un dispositif (2) selon l'une quelconque des revendications précédentes ;
- chauffer le matériau de stockage d'énergie (6) au moyen de l'au moins un élément de stockage d'énergie (18), et comprenant en outre de préférence l'étape consistant à :
- extraire de la chaleur du matériau de stockage d'énergie (6) au moyen de l'au moins un élément d'extraction de chaleur (20).
